# EUROPÄISCHE PATENTANMELDUNG

(11) **EP 4 706 798 A2**
(43) Veröffentlichungstag der Anmeldung: **11.03.2026**
(21) Anmeldenummer: 26152602.4
(22) Anmeldetag: 21.10.2020
(51) Int. Cl.: B01D 39/18

(54) **FILTERMEDIUM, VERFAHREN ZU DESSEN HERSTELLUNG UND VERWENDUNG DES FILTERMEDIUMS IN EINEM FILTERELEMENT**

(30) Priorität: 05.11.2019 DE 102019129776
(62) Teilanmeldung aus: 20202971.6
(71) Anmelder: MANN+HUMMEL GmbH, 71636 Ludwigsburg (DE)
(72) Erfinder: ZIßLSBERGER, Christian, 94539 Grafling (DE); KRAUTNER, Christoph, 84163 Marklkofen (DE); NEUMANN, Dr. Jens, 70193 Stuttgart (DE); HEINZMANN, Matthias, 69469 Weinheim (DE); KLEIN, Martin, 71638 Ludwigsburg (DE); BAUCH, Maximilian, 74357 Bönnigheim (DE)
(74) Vertreter: Mann + Hummel Intellectual Property

(57) **Zusammenfassung**

Die vorliegende Erfindung betrifft ein Filtermedium (1), umfassend eine Substratlage (2) und eine Nanofaserlage (3), wobei die Nanofaserlage (3) mit der Substratlage (2) durch Klebe- und/oder Schmelzklebefasern (4) verbunden ist, die die Nanofaserlage durchdringen. Die Nanofaserlage (3) befindet sich in der Abfolge der Lagen zwischen der Substratlage (2) und den Klebe- und/oder Schmelzklebefasern (4). Zwischen der Nanofaserlage (3) und der Substratlage (2) liegt eine Haftvermittlerschicht (6) vor, die ein flächig auf die Substratlage (2) aufgebrachtes Haftvermittlungsmittel umfasst, wobei die Nanofaserlage (3) vermittels der Haftvermittlerschicht (6) an der Substratlage (2) fixiert ist. Ferner werden ein Verfahren zur Herstellung des Filtermediums (1) sowie eine Verwendung des Filtermediums (1) offenbart.

## Beschreibung

Die Erfindung betrifft ein Filtermedium nach dem Oberbegriff des Anspruchs 1, sowie ein Verfahren zu dessen Herstellung und eine Verwendung des Filtermediums.

Aus der WO 2018/108889 A1 ist ein Filtermedium und ein Verfahren zu dessen Herstellung bekannt, wobei das Filtermedium eine Nanofaserlage und eine Substratlage aufweist, auf der die Nanofaserlage angeordnet ist. Die Nanofaserlage ist über Klebe- und/oder Schmelzklebefasern mit der Substratlage verbunden, die nach dem Ablegen von Nanofasern auf der Substratlage auf die dadurch gebildete Nanofaserlage aufgebracht werden. Die Klebe- und/oder Schmelzklebefasern sind so beschaffen, dass sie einerseits die Nanofaserlage durchdringen und die Verbindung der Nanofaserlage mit der Substratlage herstellen und anderseits eine Schutzschicht für die sehr empfindliche Nanofaserlage bereitstellen.

Nachteilig hieran ist, dass das Ablegen der Nanofasern auf der Substratlage und das Aufbringen der Klebe- und/oder Schmelzklebefasern verfahrenstechnisch nicht getrennt werden kann. Die Prozessschritte müssen konsekutiv durchgeführt werden, da die Nanofaserlage nach dem Ablegen auf der Substratlage über keinerlei Verbindung zur Substratlage verfügt, kann kein Transport, z. B. durch Aufrollen o. ä., erfolgen. Dies schränkt die Flexibilität in der Fertigung eines solchen Filtermediums ein und bindet unnötig Kapital, da einem Anlagenbestandteil zum Ablegen der Nanofasern stets unmittelbar in-line ein Anlagenbestandteil zum Auftragen der Klebe- und/oder Schmelzklebefasern prozessual nachgelagert sein muss.

Daher ist es Aufgabe der vorliegenden, ein Filtermedium zu schaffen, das mit geringeren prozessbezogenen Einschränkungen hergestellt werden kann.

Diese Aufgabe wird durch ein Filtermedium mit den Merkmalen des Anspruchs 1 gelöst.

Ferner besteht eine Aufgabe der vorliegenden Erfindung darin, ein Herstellverfahren für das Filtermedium zu schaffen, das sich durch eine erhöhte zeitliche und räumliche Flexibilität auszeichnet.

Diese Aufgabe wird durch ein Verfahren mit den Merkmalen des Anspruchs 15 gelöst.

Das erfindungsgemäße Filtermedium umfasst eine Substratlage und eine Nanofaserlage, wobei die Nanofaserlage mit der Substratlage durch Klebe- und/oder Schmelzklebefasern verbunden ist, die die Nanofaserlage durchdringen. Die Nanofaserlage befindet sich in der Abfolge der Lagen zwischen der Substratlage und den Klebe- und/oder Schmelzklebefasern. Zwischen der Nanofaserlage und der Substratlage liegt eine Haftvermittlerschicht vor, die ein flächig auf die Substratlage aufgebrachtes Haftvermittlungsmittel umfasst, wobei die Nanofaserlage vermittels der Haftvermittlerschicht an der Substratlage fixiert ist.

Die Haftvermittlerschicht ermöglicht über ihr Haftvermittlungsmittel im Rahmen eines Produktionsprozesses für ein erfindungsgemäßes Filtermedium eine Vorfixierung der Nanofasern nachdem diese auf der Substratlage abgelegt wurden, was in der Regel im Rahmen eines Elektrospinnprozesses geschieht. Die Fixierung der Nanofaserlage bezüglich der Substratlage über das Haftvermittlungsmittel der Haftvermittlerschicht weist daher vorteilhaft eine geringere Klebkraft auf als die Verbindung der Nanofaserlage mit der Substratlage durch die Klebe- und/oder Schmelzklebefasern.

Der Stand der Technik kennt vor dem Anordnen von Klebe- und/oder Schmelzklebefasern auf der Nanofaserlage, mit dem Ziel diese mit der Substratlage zu verbinden, keine Vorfixierung. Die erfindungswesentliche Vorfixierung der Nanofaserlage an der Substratlage durch das Haftvermittlungsmittel der Haftvermittlerschicht hat den Vorteil, dass bei der Herstellung des Filtermediums der Prozessschritt des Ablegens der Nanofasern auf der Substratlage und der Prozessschritt des Anordnens der Klebe- und/oder Schmelzklebefasern auf der Nanofaserlage räumlich und/oder zeitlich getrennt werden können. Dies hat deutliche Vorteile bei einer Organisation der Produktionsstätten, da weniger herstellprozessbezogene Restriktionen zu beachten sind. Hierdurch lässt sich das Filtermedium kostengünstiger herstellen als im Stand der Technik.

Die Klebe- und/oder Schmelzklebefasern sind erfindungsgemäß von der Substratlage entgegengesetzten Seite auf die Nanofaserlage aufgebracht, so dass sich eine Art Einrahmung der Nanofaserlage ergibt.

Die im Rahmen der vorliegenden Erfindung oberflächlich auf der Nanofaserlage angeordneten Schmelzklebefasern bilden aufgrund der gegenüber den Nanofasern hervorstehenden Schmelzklebefasern einen effektiven Schutz, z. B. als Griffschutz, also als Schutz vor Abrasion der Nanofasern, aus. Mit anderen Worten sorgen die Schmelzklebefasern für eine Verklebung der Nanofaserlage mit der Substratlage und zusätzlich wird eine Schutzwirkung vor Abrasion der Nanofasern erzielt.

Die Schmelzklebefasern durchdringen die Nanofaserlage und berühren dadurch auch die Substratlage, wodurch eine Verbindung, insbesondere eine stoffschlüssige Verbindung, zwischen der Nanofaserlage und der Substratlage ermöglicht wird.

Die Schmelzklebefasern können ungeordnet oder geordnet z. B. in Form von Endlosfasern mit einer Netzstruktur auf den Nanofasern abgelegt sein. Die Schmelzklebefasern können zumindest entlang Längenabschnitten mit der Substratlage verbunden sein. Als Klebe- und/oder Schmelzklebefasern im Sinne der Erfindung werden auch Klebe- und/oder Schmelzklebefasern mit vergleichsweise kleiner Längenerstreckung oder sogar Tropfen verstanden.

Gemäß einer bevorzugten Ausführungsform kann ein Flächengewicht der Haftvermittlerschicht zumindest 5-mal geringer sein als ein Flächengewicht der Klebe- und/oder Schmelzklebefasern. Hierdurch wird ein optimaler Kompromiss zwischen Vorfixierungswirkung (Haftkraft) und möglichst geringer Einschränkung der Luftdurchlässigkeit der Substratlage durch das flächig aufgebrachte Haftvermittlungsmittel erreicht. In einer bevorzugten Variante ist das Flächengewicht der Haftvermittlerschicht zumindest 10-mal geringer als das Flächengewicht der Klebe- und/oder Schmelzklebefasern.

Gemäß einer ebenfalls bevorzugten Ausführungsform kann vorgesehen sein, dass das Haftvermittlungsmittel eine Klebstoffdispersion mit einem Feststoffgehalt von 10 % bis 30 %, bevorzugt 15 % bis 25 %, ist.

In einer besonderen Ausführung kann das Haftvermittlungsmittel
- eine wässrige Polyurethandispersion sein, insbesondere mit einem Wasseranteil von 70 % bis 90 %, bevorzugt 75 % bis 85 %, und/oder einem Polyurethananteil von 10 % bis 30 %, bevorzugt 15 % bis 25 %, und/oder
- mit einem Flächengewicht von 0,05 g/m² bis 1,0 g/m², bevorzugt 0,2 g/m² bis 0,6 g/m², aufgebracht sein.

Eine weitere Ausführung sieht vor, dass die Substratlage eine Vlieslage ist, welche zumindest zu 90 Gew.% Cellulose- und/oder Kunststofffasern umfasst, wobei die Vlieslage als Krempelvlies und/oder Spinnvlies, bevorzugt als Spunbond, und/oder Meltblown ausgebildet ist.

Alternativ oder zusätzlich kann die Substratlage Bikomponentenfasern aufweisen, insbesondere mit einem PP-Basiswerkstoff, und/oder ein Flächengewicht zwischen 25 und 125 g/m², bevorzugt zwischen 30 und 90 g/m². Die Bikomponentenfasern können beispielsweise in einer Segmented-Pie oder Islands-in-the-sea Konfiguration vorliegen. Bikomponentenfasern ermöglichen vorteilhaft eine besonders gute elektrostatische Aufladung des Filtermediums.

In einer besonders bevorzugten Ausführungsform kann das Haftvermittlungsmittel der Haftvermittlerschicht zwischen benachbarten Fasern in der Substratlage eine Segelbildung verursachen. Die Segelbildung eignet sich gut zum Nachweis des Einsatzes einer Haftvermittlerschicht zur (Vor-)Fixierung der Nanofaserlage bezüglich der Substratlage. Die Segelbildung wird, insbesondere beim Einsatz von wässrigen Klebstoffdispersionen als Haftvermittlungsmittel, durch die Oberflächenspannung des Dispersionsmediums hervorgerufen. Die durch die Segelbildung verschlossene und damit nicht mehr durchströmbare Oberfläche der Substratlage darf einen bestimmten Grenzwert nicht übersteigen, da ansonsten der Druckverlust der Substratlage zu hoch wird. Die Segelbildungsneigung lässt sich durch Variieren des Viskositätsparamters des Haftvermittlungsmittels regulieren.

Ferner können die Klebe- und/oder Schmelzklebefasern mit einem Masseauftrag zwischen 1 bis 10 g/m², vorzugsweise 4 bis 6 g/m², aufgebracht sein.

Darüber hinaus können die Nanofasern der Nanofaserlage aus einem Polyamid-Werkstoff bestehen oder diesen aufweisen, insbesondere PA6. Alternativ oder zusätzlich können die Nanofasern einen mittleren Faserdurchmesser zwischen 50 und 500 nm, vorzugsweise zwischen 70 und 150 nm, aufweisen.

Dieser Faserdurchmesser ist besonders bevorzugt zur Filtration besonders feiner Partikel aus einem zu filternden Medium.

Gemäß einer weiteren, ebenfalls besonders bevorzugten Ausführungsform, kann auf der Nanofaserlage eine Schutzlage angeordnet sein, die vermittels der Klebe- und/oder Schmelzklebefasern mit der Nanofaserlage und der Substratlage verbunden ist. Die Schutzlage stellt eine weitere Lage jenseits der Nanofaserlage dar, die die mechanisch sehr empfindlichen Nanofasern vor mechanischer Beschädigung und/oder Abrasion schützt.

Die Schutzlage kann insbesondere eine Partikelfiltrationslage sein. Die Schutzlage kann bei der Herstellung des erfindungsgemäßen Filtermediums entweder nach dem Auftragen der Klebe- und/oder Schmelzklebefasern auf die Nanofaserlage auf diesen angeordnet werden oder nach Auftragen der Klebe- und/oder Schmelzklebefasern auf die Schutzlage mit den Klebe- und/oder Schmelzklebefasern voran auf der Nanofaserlage angeordnet werden.

In beiden Varianten wird erreicht, dass die Klebe- und/oder Schmelzklebefasern die Nanofaserlage durchdringen, wodurch sowohl die Nanofaserlage mit der Substratlage verbunden wird als auch die Schutzlage mit der Substratlage und der dazwischen liegenden Nanofaserlage.

In einer noch weiteren Ausführungsform kann die Schutzlage eine Vlieslage sein, welche zumindest zu 90 Gew.% Cellulose- und/oder Kunststofffasern umfasst. Insbesondere kann die Substratlage als Krempelvlies und/oder Spinnvlies, bevorzugt als Spunbond oder Meltblown, ausgebildet sein.

Gemäß einer Weiterbildung kann vorgesehen sein, dass die Schutzlage Bikomponentenfasern aufweist, insbesondere mit einem PET- oder PP-Basiswerkstoff, und/oder ein Flächengewicht zwischen 15 g/m² und 40 g/m², bevorzugt zwischen 25 g/m² bis 30 g/m^{2'}, aufweist.

In weiteren Ausführungsformen kann das Filtermedium an die Substratlage und/oder die Schutzlage angrenzend zumindest eine weitere Lage aufweisen. Die weitere Lage kann bevorzugt als Aktivmateriallage ausgebildet sein und beispielsweise zumindest eine Aktivkohle, zumindest einen Zeolith und/oder zumindest ein lonentauschermaterial umfassen. Es kann auch mehr als eine Aktivmateriallage vorgesehen sein, wobei insbesondere in getrennten Aktivmateriallagen unterschiedliche Typen von Aktivkohlen eingesetzt werden, so insbesondere katalytische und/oder (basisch) imprägnierte Aktivkohlen.

Alternativ zu einer Ausführung mit Schutzlage kann vorgesehen sein, dass das Filtermedium ausschließlich aus der Substratlage, der Nanofaserlage, den Klebe- und/oder Schmelzklebefasern und der Haftvermittlerschicht besteht. Weitere Materiallagen sind in dieser vorteilhaften Ausführungsvariante nicht vorgesehen, wodurch eine gute Faltbarkeit des Filtermediums gewährleistet werden kann, da dessen Dicke gering ist.

Die Klebe- und/oder Schmelzklebefasern können einen thermoplastischen Kunststoff aufweisen oder besonders bevorzugt aus einem thermoplastischen Kunststoff bestehen, sodass die Verbindung der Substratlage und der Nanofaserlage in erster Linie durch ein Schmelzen der Fasern erfolgt.

Insbesondere kann der thermoplastische Kunststoff ausgesucht sein aus einer oder mehrerer Verbindungen der folgenden Gruppen: Polyolefin, Polyester, Polyurethan und/oder Polyamid.

Geeignete Basispolymere für Schmelzklebstoffe umfassen Polyamide (PA), Polyethylen (PE), Amorphe Polyalphaolefine, Ethylenvinylacetat-(Co)polymere (EVAC), Polyester Elastomere (TPE-E), Polyurethan-Elastomere (TPE-U), Copolyamid-Elastomere (TPE-A), und Vinylpyrrolidon/Vinylacetat-Copolymere.

Die Klebe- und/oder Schmelzklebefasern können vorteilhaft eine Faserquerschnittsfläche aufweisen, also die senkrechte Schnittfläche durch eine Faser, welche zumindest das 10-fache, vorzugsweise zumindest das 15-fache, der Faserquerschnittsfläche der Nanofasern der Nanofaserlage beträgt. Dadurch wird eine breite Umrahmung für einen besonders guten mechanischen Schutz ermöglicht.

Alternativ können auch Klebefasern, somit Fasern mit denen aufgrund ihrer Löse- oder Schmelzeigenschaften Verklebungen erzeugt werden können, wobei diese chemisch oder physikalisch härtend sein können und/oder die bereits erwähnten Schmelzklebefasern, also Schmelzklebstoffe (auch Hotmelts genannt) in Faserform, wobei die Schmelzklebstofffasern thermisch aufschmelzbare Klebstoffsysteme sind, die durch Abkühlung Kohäsion (innere Festigkeit) entwickeln, im Rahmen der vorliegenden Erfindung genutzt werden. Schmelzklebstofffasern können thermoplastisch oder reaktiv sein. Thermoplastische Schmelzklebstoffe lassen sich reversibel aufschmelzen. Reaktive Schmelzklebstoffe zeigen während oder nach der Abkühlung chemische Vernetzungsreaktionen.

Die Klebe- und/oder Schmelzklebefasern können vorteilhaft einen Schmelzpunkt aufweisen, welcher mindestens 30°C unter dem Schmelzpunkt der Nanofasern der Nanofaserlage liegt. Dadurch erfolgt beim Auftrag der Schmelzklebefasern im teilverflüssigten Zustand keine Ausbildung eines großflächigen Schmelzbereichs durch gleichzeitiges Schmelzen der Nanofasern, wodurch die Filterperformance der Nanofaserlage verringert werden würde.

Vorteilhaft beträgt der Schmelzpunkt der Schmelzkleberfasern 200°C. Dem gegenüber liegt der Schmelzpunkt einer herkömmlichen Polyamid-Nanofasern bei 220°C.

Für eine Bereitstellung einer großen Filtrationsfläche bei gleichzeitig hinreichendem Schutz vor mechanischen Belastungen kann mehr als 70 %, vorzugsweise mehr als 90 %, einer Oberfläche der Nanofaserlage an- oder abströmseitig zur Substratlage unbedeckt von Klebe- und/oder Schmelzkleberfasern vorliegen.

Die Schmelzklebefasern können in einer weiteren Ausführungsvariante mit der Substratlage zumindest bereichsweise verschmolzen sein. Ebenso weisen die Nanofasern der Nanofaserlage mit den Schmelzklebefasern Schmelzpunkte als Verbindungspunkte auf. In dieser Ausführungsform durchdringen die Schmelzklebefasern die Nanofaserlage und sorgen für eine besonders vorteilhafte Verklebung der Nanofaserlage mit dem Träger und zusätzlich wird die Schutzwirkung vor Abrasion der Nanofasern erzielt.

Die Nanofasern der Nanofaserlage und die Substratlage können jeweils Verbindungsbereiche mit den Klebe- und/oder Schmelzklebefasern aufweisen, in welchen ein Stoffschluss zwischen den Klebe- und/oder Schmelzklebefasern mit den Nanofasern der Nanofaserlage oder der Substratlage erfolgt.

Das erfindungsgemäße Verfahren zur Herstellung eines Filtermediums umfasst nach einer ersten Ausführungsform die folgenden Schritte:
A Bereitstellen einer Substratlage;
B Flächig Auftragen eines Haftvermittlungsmittels auf die Substratlage, um eine Haftvermittlungsschicht zu bilden;
C Anordnen einer Nanofaserlage auf der Haftvermittlungsschicht, dadurch Fixieren der Nanofaserlage bezüglich der Substratlage;
D Anordnen von Klebe- und/oder Schmelzklebefasern auf der Nanofaserlage, die die Nanofaserlage durchdringen, dadurch zumindest Ausbilden einer Verbindung zwischen der Substratlage und der Nanofaserlage.

Das Anordnen der Klebe- und/oder Schmelzklebefasern auf der Nanofaserlage in Schritt D kann entweder durch unmittelbares Anordnen der Klebe- und/oder Schmelzklebefasern auf der Nanofaserlage oder durch mittelbares Anordnen der Klebe- und/oder Schmelzklebefasern auf der Nanofaserlage erfolgen. Unter "mittelbarem Anordnen" kann beispielsweise verstanden werden, dass die Klebe- und/oder Schmelzklebefasern zunächst auf einer weiteren Lage des Filtermediums angeordnet werden, die anschließend mit ihrer von den Klebe- und/oder Schmelzklebefasern bedeckten Seite voraus auf der Nanofaserlage angeordnet wird, sodass die noch klebefähigen Klebe- und/oder Schmelzklebefasern die Nanofaserlage durchdringen können.

Gemäß einer bevorzugten Variante des Verfahrens kann das Verfahren ein diskontinuierliches Verfahren sein, wobei insbesondere der Schritt D zeitlich und/oder räumlich getrennt von dem Schritt C durchgeführt wird, wobei bevorzugt nach dem Schritt C der
Schritt C1: Aufwickeln eines aus Schritt C erhaltenen Produktes;
und vor dem Schritt D der
Schritt D1: Zuführen des in Schritt C1 aufgewickelten Produktes;
durchgeführt wird.

Dies hat den Vorteil, dass in dem erfindungsgemäßen Herstellprozess nicht wie bisher im Stand der Technik üblich die Verbindung der Nanofaserlage mit der Substratlage durch Klebe- und/oder Schmelzklebefasern direkt nach dem Anordnen/Ablegen der Nanofaserlage auf der Substratlage erfolgen muss, sondern der Schritt des (End-)Verbindens der Nanofaserlage mit der Substratlage räumlich und oder zeitlich von dem Schritt des Anordnens/Ablegens der Nanofaserlage auf der Substratlage getrennt werden kann. Vorteilhaft damit ist eine deutliche Flexibilisierung des Herstellprozesses verbunden, da beispielsweise das Produktionsmittel zur Anordnung der Klebe- und/oder Schmelzklebefasern auf der Nanofaserlage nicht in-line unmittelbar der Nanofaserablage nachgeordnet sein muss, sondern an anderer Stelle in einer Produktionsanlage vorgesehen sein kann, sodass dieses Produktionsmittel auch für andere Zwecke mit verwendet werden kann.

Dies wird dadurch erreicht, dass die Nanofaserlage bereits beim bzw. kurz nach dem Ablegen der Nanofasern durch die Haftvermittlungsschicht auf der Substratlage bezüglich der Substratlage fixiert bzw. vorbefestigt ist. Es können dadurch Produktionsmittel optimal ausgenutzt werden, was die Kosten bei der Herstellung beträchtlich senken kann, da die Produktionsmittel nicht fest für die Herstellung des erfindungsgemäßen Filtermediums in eine Produktionsinfrastruktur eingebunden, sondern anderweitig einsetzbar sind.

Gemäß einer bevorzugten Weiterbildung des Verfahrens umfasst das Verfahren zusätzlich den
Schritt F: Anordnen einer Schutzlage auf der Nanofaserlage, dabei Ausbilden einer Verbindung zwischen der Schutzlage, der Nanofaserlage und der Substratlage durch die Klebe- und/oder Schmelzklebefasern.

In einer ebenfalls bevorzugten zusätzlichen Weiterbildung können die Klebe- und/ oder Schmelzklebefasern vor dem Anordnen der Schutzlage auf der Nanofaserlage entweder
(a) auf der Nanofaserlage abgelegt werden oder
(b) auf der Schutzlage abgelegt werden, wobei die Schutzlage beim Anordnen auf der Nanofaserlage mit den Klebe- und/oder Schmelzklebefasern voran auf der Nanofaserlage angeordnet wird.

In einer Variante ist es vorteilhaft möglich, dass das Auftragen des Haftvermittlungsmittels auf die Substratlage in dem Schritt B vermittels einer vom Haftvermittlungsmittel benetzen Walze erfolgt. Über einen Walzenauftrag kann eine besonders kleine Menge an Haftvermittlungsmittel aufgetragen werden, insbesondere wenn als Haftvermittlungsmittel eine niedrig viskose Klebstoffdispersion zum Einsatz kommt, bevorzugt in Form einer wässrigen Klebstoffdispersion.

Ein weiterer Aspekt der Erfindung betrifft die Verwendung des erfindungsgemäßen Filtermediums in einem Filterelement, insbesondere in gefalteter, geprägter und/oder gewickelter Form, insbesondere in Verbindung mit einer Wärmekraftmaschine, einer elektrochemischen Vorrichtung und/oder einer Belüftungsvorrichtung, insbesondere eines Kraftfahrzeugs.

Nachfolgend wird die Erfindung anhand von Ausführungsbeispielen unter Zuhilfenahme mehrerer Figuren näher erläutert.

Es zeigen:
- Fig. 1a: Schematische Darstellung eines erfindungsgemäßen Filtermediums in einer ersten Ausführungsform;
- Fig. 1b: schematische Darstellung eines erfindungsgemäßen Filtermediums gemäß der ersten Ausführungsform, Detail A aus Fig. 1a;
- Fig. 2: schematische Darstellung eines erfindungsgemäßen Filtermediums in einer zweiten Ausführungsform;
- Fig. 3: schematische Darstellung eines erfindungsgemäßen Herstellverfahrens;
- Fig. 4: REM-Aufnahme eines Vorprodukts des erfindungsgemäßen Filtermediums mit sichtbarer Segelbildung in 100-facher Vergrößerung;
- Fig. 5: REM-Aufnahme eines Vorprodukts des erfindungsgemäßen Filtermediums in 1000-facher Vergrößerung;
- Fig. 6: REM-Aufnahme des erfindungsgemäßen Filtermediums in 500-facher Vergrößerung;
- Fig. 7: REM-Aufnahme des erfindungsgemäßen Filtermediums in 1000-facher Vergrößerung;
- Fig. 8: REM-Aufnahme des erfindungsgemäßen Filtermediums mit sichtbarer Segelbildung in 100-facher Vergrößerung;
- Fig. 9: REM-Aufnahme des erfindungsgemäßen Filtermediums mit sichtbarer Segelbildung in 1000-facher Vergrößerung.

Die Figuren zeigen lediglich Beispiele und sind nicht beschränkend zu verstehen.

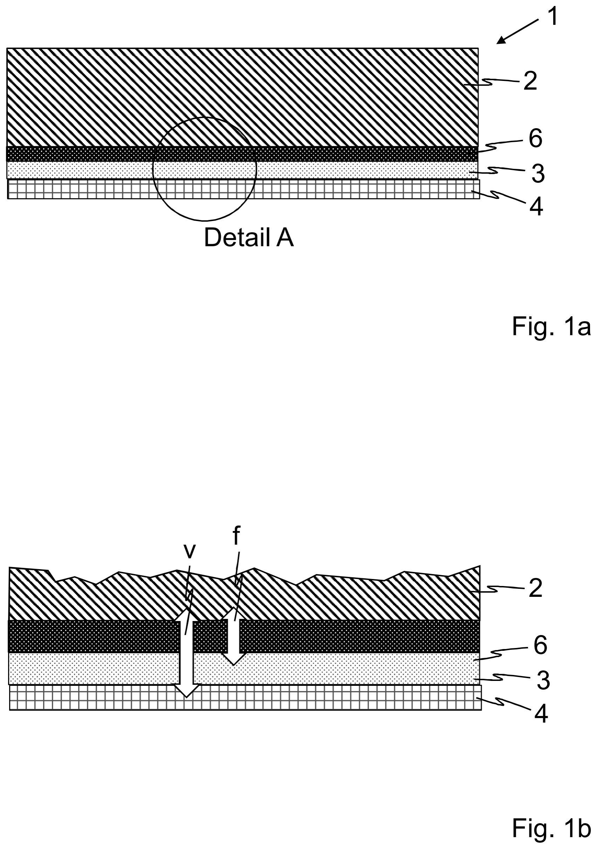

Fig. 1 zeigt ein Ausführungsbeispiel eines erfindungsgemäßen Filtermediums 1 mit einer Substratlage 2, die bevorzugt als erste Faserlage ausgebildet ist, und mit zumindest einer an- oder abströmseitig auf der Substratlage angeordneten Nanofaserlage 3, die als zweite Faserlage ausgebildet ist.

Die Substratlage 2 kann bevorzugt als Vlieslage und besonders bevorzugt als Krempel- oder Spinnvlies ausgebildet sein, insbesondere als Meltblown oder Spunbond. Sie umfasst vorzugsweise Fasern mit einem mittleren Faserdurchmesser von vorzugsweise mehr als 1 µm, insbesondere zwischen 3 µm bis 50 µm.

Die Substratlage 2 kann in einer bevorzugten Ausführungsvariante zu mehr als 90 Gew.% Kunststofffasern und/oder Cellulosefasern umfassen. Die restlichen Gew.% bis zu 100 Gew.% umfassen Imprägnierungszusätze zur mechanischen und chemischen Stabilisierung und Bindemittel. Die Substratlage 2 braucht dabei selbst keine wesentliche Filterfunktion aufweisen, sondern sie kann hauptsächlich der Stabilität des Filtermediums dienen, insbesondere der darauf angeordneten weiteren Faserlage, insbesondere der Nanofaserlage 3. Gemäß dieser Ausführungsform kann die Substratlage auch als Stützlage bezeichnet werden. Alternativ kann die Substratlage auch als eine Vorfilterlage ausgebildet sein, welche insbesondere gröbere Partikel aus dem Mediumstrom herausfiltert.

Die Substratlage 2 kann vorzugsweise als Trägerlage für eine benachbart dazu angeordnete Nanofaserlage 3 ausgebildet sein. Die Einzelfasern der Nanofaserlage 3 weisen einen extrem geringen Faserdurchmesser auf, und die aufgebrachte Lage ist strukturell vergleichbar mit einer feinen Spinnwebe. Eine entsprechend hohe Tendenz zur Zerstörung der Nanofaserlage 3 besteht und dieser Tendenz soll gegengewirkt werden.

Die Fasern der Nanofaserlage 3 weisen vorzugsweise einen mittleren Faserdurchmesser zwischen 50 bis 500 nm auf, vorzugsweise zwischen 70 bis 150 nm. Der mittlere Faserdurchmesser kann gemäß DIN 53811: 1970-07 bestimmt werden.

Die Nanofaserlage 3 kann beispielsweise an- oder abströmseitig zur Substratlage 2 angeordnet sein. Dadurch kann eine vorteilhafte Stabilisierung durch die Schmelzfasern 4 erreicht werden.

Befindet sich die Nanofaserlage 3 abströmseitig zur Substratlage 2, so ist die Substratlage 2 vorzugsweise als Filterlage, insbesondere als Vlieslage zur Filtration, ausgebildet. Die Nanofaserlage 3 dient dabei der Feinfiltration des Mediums.

Befindet sich die Nanofaserlage 3 anströmseitig zur Substratlage 2, so dient die Nanofaserlage 3 einer Oberflächenfiltration. Die abströmseitig zur Nanofaserlage 3 angeordnete Substratlage 2 braucht in dieser Ausführungsvariante nahezu keine Filtrationseigenschaften aufzuweisen, sondern kann, wie vorbeschrieben, als Stützlage ausgebildet sein.

Bei der Herstellung des Filtermediums 1 wird zunächst auf die Substratlage 2 eine Haftvermittlerschicht 6 aufgebracht, wobei ein Flächengewicht der Haftvermittlerschicht 6 um ein Vielfaches geringer ist als ein Flächengewicht der Klebe- und/oder Schmelzkleberfasern 4, bevorzugt zumindest 5-mal geringer. Das Haftvermittlungsmittel der Haftvermittlerschicht 6 wird bevorzugt im Herstellprozess als eine niedrig viskose Klebstoffdispersion, bevorzugt als wässrige Polyurethandispersion, mittels Walzenauftrag auf die Substratlage 2 aufgetragen, da so die angestrebten geringen Flächengewichte in der Haftvermittlerschicht 6 optimal erreichbar sind.

Nach dem Auftragen der Haftvermittlerschicht 6 werden die Nanofasern der Nanofaserlage 3 auf der noch klebefähigen Haftvermittlerschicht 6 abgelegt, wodurch die Nanofasern eine mechanische (Vor-)Fixierung bezüglich der Substratlage 2 erfahren. Nachdem die (Vor-)Fixierung der Nanofaserlage 3 bezüglich der Substratlage 2 in Form des Haftvermittlungsmittels der Haftvermittlerschicht 6 ausgehärtet ist kann der so erhaltene Lagenverbund problemlos gehandhabt werden und beispielsweise an einen räumlich und/oder zeitlich getrennten Prozessschritt zum Aufbringen der Klebe- und/oder Schmelzkleberfasern 4 zur (End-)Verbindung der Nanofaserlage 3 mit der Substratlage 2 zugeführt werden.

Die Nanofaserlage 3 und die Substratlage 2 sind durch Klebe- und/oder Schmelzklebefasern 4 miteinander verbunden. Die Klebe- und/oder Schmelzklebefasern 4 können vereinzelt oder vorzugsweise als komplette Faserlage ausgebildet sein.

Die Klebe- und/oder Schmelzklebefasern 4 werden derart auf der Nanofaserlage 3 angeordnet, dass diese die Nanofaserlage 3 durchdringen und so eine mechanisch belastbare Verbindung der Nanofaserlage 3 und der Substratlage 2 herstellen und zudem an der freien Oberfläche der Nanofaserlage 3 einen Schutz vor mechanischer Beschädigung der Nanofaserlage 3 (Griffschutz) bereitstellen.

Die Klebe- und/oder Schmelzklebefasern 4 werden mit einem Massenauftrag von zwischen 1 bis 10 g/m², vorzugsweise 4 bis 6 g/m², auf der Abfolge der Substrat- und der Nanofaserlage 2 und 3 angeordnet.

Die Klebe- und/oder Schmelzklebefasern 4 werden durch einen Heißspritz- oder Sprühvorgang nach dem Aufbringen der Nanofaserlage 3 auf der Nanofaserlage 3 angeordnet.

Bevorzugt weisen die Klebe- und/oder Schmelzklebefasern zumindest zu 20 Gew.%, vorzugsweise zu mehr als 65 Gew.%, ein thermoplastisches Kunststoffmaterial oder ein adhäsiv wirkendes Fasermaterial auf. Besonders bevorzugt kann dies ein Polyolefin, ein Polyester und/oder ein Polyamid sein. Der mittlere Faserdurchmesser der Klebe- und/oder Schmelzklebefasern kann bevorzugt von 5 µm bis 50 µm, besonders bevorzugt zwischen 15 bis 30 µm, betragen. Die verbleibenden Massenanteile in Gew.%, die bis zu 100 Gew.% fehlen umfassen insbesondere Füllstoffe wie beispielsweise Calciumcarbonat.

Als adhäsiv wirkendes Fasermaterial kann z. B. ein Fasermaterial genutzt werden, welches teilweise angelöst ist, z. B. durch die Verwendung eines lösungsmittelhaltigen Klebstoffes. Alternativ oder zusätzlich können die Klebefasern 4 selbst aus einem adhäsiv-wirkenden Material bestehen oder mit einer adhäsiv-wirkenden Beschichtung versehen sein.

Die Anordnung der Klebe- und/oder Schmelzklebefasern 4 auf der Oberfläche der Nanofaserlage 3 ermöglicht als anströmseitig erste Lage einen Schutz (z. B. Griffschutz) der Nanofaserlage 3, da die Klebe- und/oder Schmelzklebefasern 4 aufgrund ihres um ein Vielfaches größeren Durchmessers mechanisch wesentlich stabiler sind als die Fasern der Nanofaserlage 3.

Gemäß einer Ausführungsform werden die Klebe- und/oder Schmelzklebefasern 4 unmittelbar auf die Oberfläche der Nanofaserlage 3 aufgetragen.

Das Filtermedium 1 mit den unterschiedlichen Materiallagen ist faltbar und kann als Faltenfilter ausgebildet sein.

Bevorzugt umfasst das Filtermedium 1 vor Materiallagen, nämlich die Substratlage 2, die Haftvermittlerschicht 4, die Nanofaserlage 3 und die Schmelzklebefasern 4 oder die Schmelzfaserlage.

Das erfindungsgemäße Filtermedium 1 eignet sich insbesondere zum Einsatz in Raumluftfilter, insbesondere als Kabinenluftfilter für Kraftfahrzeuge. Anwendungen sind jedoch auch im Bereich der Industriefilter möglich oder zur Filtration der Motoransaugluft von Verbrennungskraftmaschinen.

In der Fig. 1b, welche das in Fig. 1a eingezeichnete Detail darstellt, ist die weiter oben beschriebene unterschiedliche Wirkung der Haftvermittlerschicht 6 und der Klebe und/oder Schmelzkleberfasern 4 auf die Befestigung der Nanofaserlage 3 gezeigt. Während die Haftvermittlerschicht 6 mit einer gegenüber den Klebe und/oder Schmelzkleberfasern 4 relativ geringeren Haftkraft die Nanofaserlage oberflächlich gegenüber der Substratlage 2 fixiert (Pfeil f) durchdringen die Klebe und/oder Schmelzkleberfasern 4 die Nanofaserlage 3 und verbinden die Nanofaserlage 3 mit gegenüber der Haftvermittlerschicht 6 relativ größeren Haftkraft mit der Substratlage 2 (Pfeil v). Gleichzeitig schützen die Klebe und/oder Schmelzkleberfasern 4 die Nanofaserlage 3.

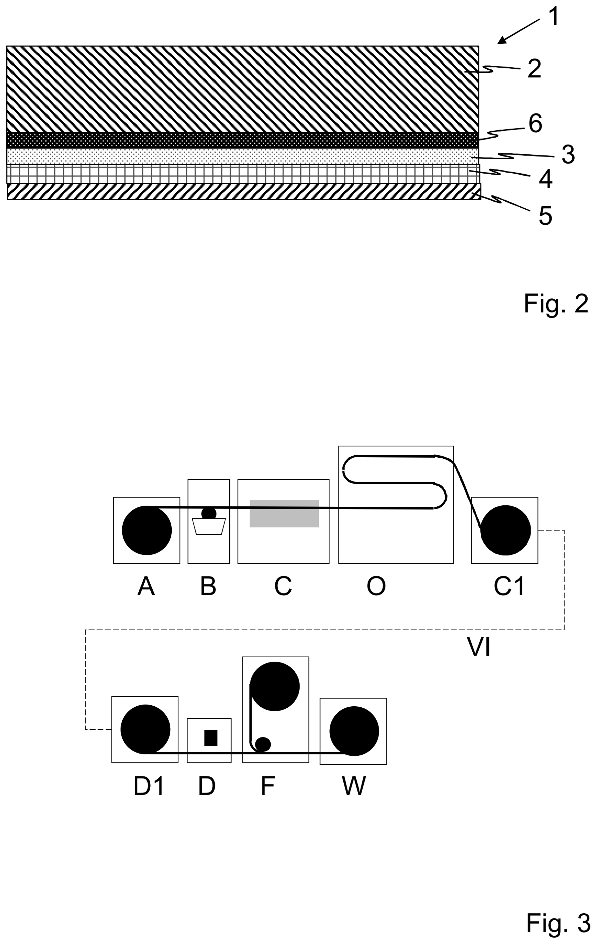

In der Fig. 2 ist ein erfindungsgemäßes Filtermedium 1 in einer zweiten Ausführungsform dargestellt. Als zusätzliche Lage weist dieses eine Schutzlage 5 auf, die sich in der Abfolge der Lagen an die Klebe und/oder Schmelzkleberfasern 4 anschließt. Die Schutzlage 5 ist, ebenso wie die Nanofaserlage 3, mittels der Klebe und/oder Schmelzkleberfasern 4 mit der Substratlage 2 verbunden, d. h. die Klebe und/oder Schmelzkleberfasern 4 verbinden sowohl die Schutzlage 5 mit der Substratlage 2 als auch die Nanofaserlage 3 mit der Substratlage 2.

Gemäß dieser Ausführungsform ist im Herstellprozess sowohl möglich, dass die Klebe und/oder Schmelzkleberfasern 4 nach dem Ablegen der Nanofaserlage 3 auf der Substratlage 2 unmittelbar auf der Nanofaserlage 3 abgelegt werden und im Anschluss die Schutzlage 5 auf die noch klebefähigen Klebe und/oder Schmelzkleberfasern 4 angeordnet wird oder aber die Klebe und/oder Schmelzkleberfasern 4 werden vor dem Anordnen der Schutzlage 5 auf dem Lagenverbund auf eine Oberfläche der Schutzlage 5 abgelegt, wobei die Schutzlage 5 im Anschluss mit den noch klebefähigen Klebe und/oder Schmelzkleberfasern 4 voran auf der Nanofaserlage 3 angeordnet wird (so genanntes mittelbares Anordnen der Klebe und/oder Schmelzkleberfasern 4).

Die Schutzlage ist als eine Vlieslage ausgebildet, welche zumindest zu 90 Gew.% Cellulose- und/oder Kunststofffasern umfasst. Die Schutzlage kann insbesondere als Krempelvlies und/oder Spinnvlies, bevorzugt als Spunbond oder Meltblown, ausgebildet sein. Besonders bevorzugt weist die Schutzlage Bikomponentenfasern auf, insbesondere mit einem PET- oder PP-Basiswerkstoff, und/oder ein Flächengewicht zwischen 15 g/m² und 40 g/m², bevorzugt 25 g/m² bis 30 g/m².

Je nach Durchströmungsrichtung und angestrebter Filtrationscharakteristik kann in dem Filtermedium 1 entweder die Substratlage 2 oder die Schutzlage 5 die Hauptfiltrationsfunktion übernehmen.

In der Fig. 3 ist ein Herstellprozessschema für das Filtermedium 1 gemäß der zweiten Ausführungsform gezeigt. Das Herstellverfahren für das Filtermedium 1 gemäß der ersten Ausführungsform unterscheidet sich hiervon lediglich dadurch, dass dieses Schritt F nicht aufweist.

Zunächst wird im Schritt A die Substratlage 2 bereitgestellt, hier in Rollenform, und dem Prozess bspw. durch Abwickeln zugeführt. Die Substratlage 2 wird als nächstes im Schritt B mit dem Haftvermittlungsmittel beschichtet um die Haftvermittlerschicht 6 zu erhalten, was hier als Walzenauftrag einer niedrig viskosen wässrigen Klebstoffdispersion erfolgt. Solange die Haftvermittlerschicht 6 noch klebefähig ist werden im Schritt C Nanofasern zur Ausbildung der Nanofaserlage 3 auf der Haftermittlerschicht 6 abgelegt, insbesondere durch ein Elektrospinnverfahren. Die Haftvermittlerschicht 6 stellt hierbei eine (Vor-)Fixierung der Nanofaserlage 3 bezüglich der Substratlage 2 bereit, sodass der erhaltene Lagenverbund nachgelagerten Prozessschritten zugeführt werden kann. Nach dem Auftrag der Nanofasern 3 wird der Lagenverbund im Schritt O einem Ofen zugeführt, um die Fixierung aushärten zu lassen. Hiernach kann der Lagenverbund im Schritt C1 aufgerollt werden, bevor er weiter verarbeitet wird. Der dann folgende Prozessschritt D1 kann zeitlich und/oder räumlich getrennt durchgeführt werden, was durch die gestrichelte Linie VI symbolisiert wird.

Selbstredend kann das erfindungsgemäße Herstellverfahren jedoch auch als kontinuierlicher Prozess durchgeführt werden.

Der aus dem Schritt C1 erhaltene aufgerollte Lagenverbund wird in dem Schritt D1 wieder abgerollt und dem Auftrag von Klebe- und/oder Schmelzklebefasern 4 im Schritt D zugeführt, welche hier unmittelbar auf der Nanofaserlage 3 abgelegt werden. Solange die Klebe- und/oder Schmelzklebefasern 4 noch klebefähig sind wird der Lagenverbund im Schritt F mit der Schutzlage 5 zusammen gebracht (laminiert), welche insbesondere in Form eines Bahnmaterials abgerollt wird. Die Klebe- und/oder Schmelzklebefasern 4 verbinden daher sowohl die Nanofaserlage 3 mit der Substratlage 2 als auch die Schutzlage 5 mit der Substratlage 2. Zum Abschluss des Herstellverfahrens wird der aus dem Schritt F erhaltene Lagenverbund schließlich im Schritt W aufgerollt und kann einer Verarbeitung zu beispielsweise gefalteten Filterelementen zugeführt werden.

In einer nicht figurativ dargestellten Prozessvariante kann im Schritt D der Auftrag der Klebe- und/oder Schmelzklebefasern 4 auf die Schutzlage 5 erfolgen, wobei die Schutzlage 5 im Anschluss mit den Klebe- und/oder Schmelzklebefasern 4 voran auf der Nanofaserlage 3 des aus Schritt D1 zugeführten Lagenverbunds abgelegt wird.

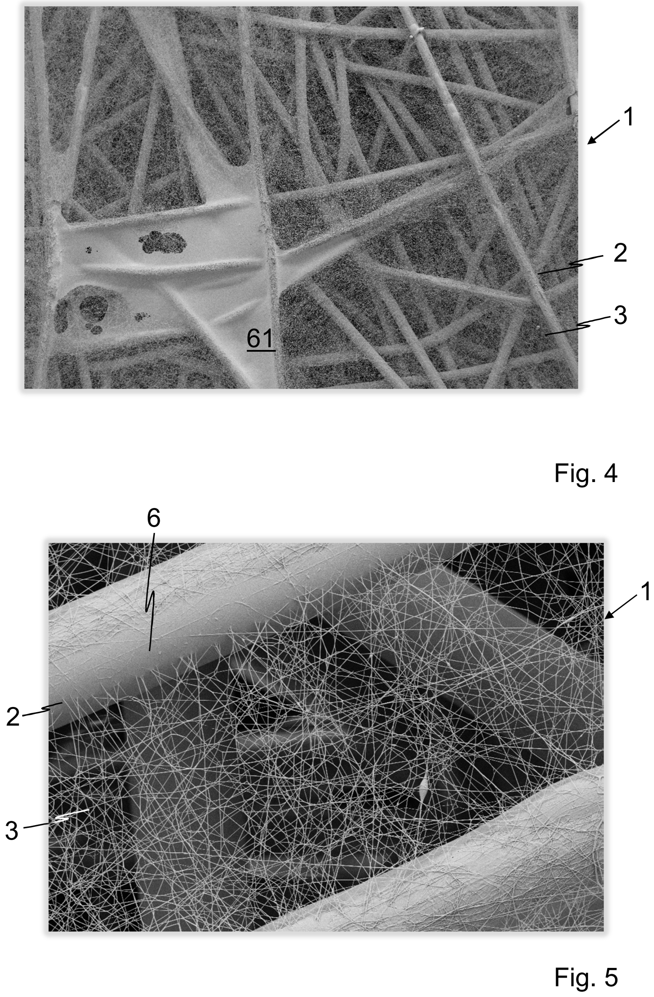

In der Fig. 4 ist eine REM-Aufnahme in 100-facher Vergrößerung eines Vorprodukts des erfindungsgemäßen Filtermediums 1 gezeigt, wobei dem Betrachter zugewandt die Nanofaserlage 3 zu erkennen ist, die sich als feines Netz abzeichnet. Auf dem dargestellten Vorprodukt sind die Klebe- und/oder Schmelzklebefasern 4 noch nicht vorhanden, sodass (vgl. Prozessschema der Fig. 3) dies dem Zustand nach Schritt C bzw. im Schritt D1 entspricht, d. h. nach dem Ablegen der Nanofasern auf der Haftvermittlerschicht 6. Es ist in der Fig. 4 deutlich eine Segelbildung 61 zwischen einzelnen Fasern der Substratlage 2 zu erkennen, welche durch das Haftvermittlungsmittel der Haftvermittlerschicht 6 hervorgerufen wird. Eine derartige Segelbildung 61 eignet sich daher zum Nachweis des Einsatzes einer erfindungsgemäßen (Vor-)Fixierung vermittels Haftvermittlungsmittel. Die Segelbildung 61 ist besonders gut beim Einsatz von wässrigen Klebstoffdispersionen zu beobachten auf Grund der Oberflächenspannung des Wassers. Fig. 5 zeigt in 1000-facher Vergrößerung die Wirkung der Haftvermittlerschicht 6 im Sinne einer Fixierung der Nanofasern 3 an den Fasern der Substratlage 2. Es ist gut zu erkennen, dass die einzelnen Fasern der Substratlage 2 mit Haftvermittlungsmittel 6 benetzt sind, sodass die als feines Netz vorliegenden Nanofasern 3 an den Fasern der Substratlage 2 haften.

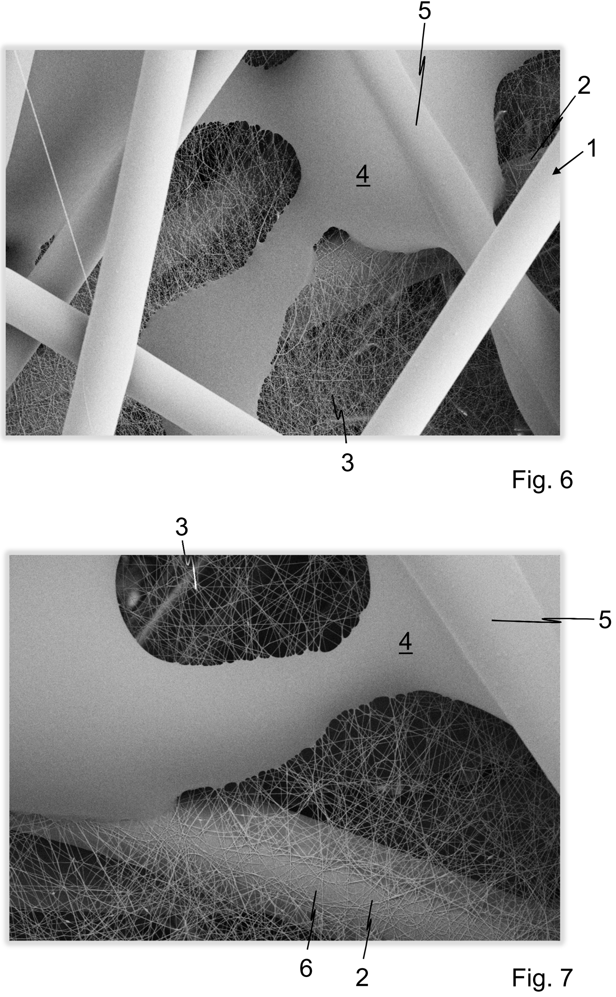

In Fig. 6 ist in 500-facher Vergrößerung ein Filtermedium 1 gemäß der zweiten Ausführungsform (mit Schutzlage 5) gezeigt, wobei dem Betrachter zugewandt die Schutzlage 5 zu sehen ist und dahinter in entsprechender Reihenfolge die Klebe- und/oder Schmelzkleberfasern 4, die Nanofaserlage 3 (feines Netz) und die Substratlage 2. Insbesondere ist zu erkennen, dass die Klebe- und/oder Schmelzkleberfasern 4 aus der Bildrichtung heraus über die Nanofaserlage 3 überragen und dadurch die hierin beschriebene mechanische Schutzfunktion gewährleisten können. Die Klebe- und/oder Schmelzkleberfasern 4 verbinden sowohl die Schutzlage 5 mit der Substratlage 2 als auch die Nanofaserlage 3 mit der der Substratlage 2. Die im Bild oben rechts gezeigte Faser der Schutzlage 5 ist hierbei von den Klebe- und/oder Schmelzkleberfasern 4 vollumfänglich umschlossen.

In der Fig. 7, die das Filtermedium der Fig. 7 in 1000-facher Vergrößerung zeigt, ist darüber hinaus die Wirkung der Haftvermittlerschicht 6 zu erkennen, nämlich in Form einer Fixierung der Nanofaserlage 3 (feines Netz) an der im Bild unten dargestellten Faser der Substratlage 2.

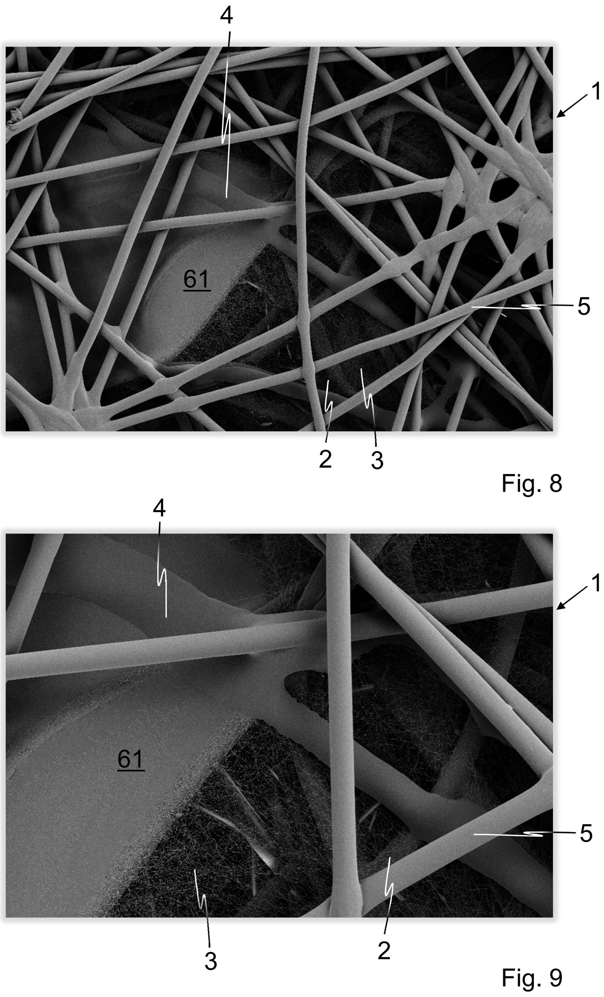

In den Fig. 8 und Fig. 9 sind zwei weitere REM-Aufnahmen des erfindungsgemäßen Filtermediums 1 gezeigt, wobei dem Betrachter zugewandt die Schutzlage 5 zu sehen ist und dahinter in entsprechender Reihenfolge die Klebe- und/oder Schmelzkleberfasern 4, die Nanofaserlage 3 (feines Netz) und die Substratlage 2. In diesen Aufnahmen ist die bereits im Zusammenhang mit den Fig. 4 und Fig. 5 erläuterte Segelbildung zwischen Fasern der Substratlage 2 zu erkennen, die sich als Nachweis der erfindungsgemäßen (Vor-)Fixierung der Nanofaserlage 3 bezüglich der Substratlage 2 eignet.

## Patentansprüche

1. Filtermedium (1), umfassend eine Substratlage (2) und eine Nanofaserlage (3), wobei die Nanofaserlage (3) mit der Substratlage (2) durch Klebe- und/oder Schmelzklebefasern (4) verbunden ist, die die Nanofaserlage (3) durchdringen, wobei sich die Nanofaserlage (3) in der Abfolge der Lagen zwischen der Substratlage (2) und den Klebe- und/oder Schmelzklebefasern (4) befindet, **dadurch gekennzeichnet, dass** zwischen der Nanofaserlage (3) und der Substratlage (2) eine Haftvermittlerschicht (6) vorliegt, die ein flächig auf die Substratlage (2) aufgebrachtes Haftvermittlungsmittel umfasst, wobei die Nanofaserlage (3) vermittels der Haftvermittlerschicht (6) an der Substratlage (2) fixiert ist.

2. Filtermedium (1) nach Anspruch 1, **dadurch gekennzeichnet, dass** ein Flächengewicht der Haftvermittlerschicht (6) zumindest 5-mal geringer ist als ein Flächengewicht der Klebe- und/oder Schmelzklebefasern (4).

3. Filtermedium (1) nach Anspruch 1 oder 2, **dadurch gekennzeichnet, dass** das Haftvermittlungsmittel eine Klebstoffdispersion mit einem Feststoffgehalt von 10 % bis 30 % 5, bevorzugt 15 % bis 25 %, ist.

4. Filtermedium (1) nach einem der Ansprüche 1 bis 3, **dadurch gekennzeichnet, dass** das Haftvermittlungsmittel
- eine wässrige Polyurethandispersion ist, insbesondere mit einem Wasseranteil von 70 % bis 90 %, bevorzugt 75 % bis 85 %, und/oder einem Polyurethananteil von 10 % bis 30 % 5, bevorzugt 15 % bis 25 %, und/oder
- mit einem Flächengewicht von 0,05 g/m² bis 1,0 g/m², bevorzugt 0,2 g/m² bis 0,6 g/m², aufgebracht ist.

5. Filtermedium (1) nach einem der vorhergehenden Ansprüche, **dadurch gekennzeichnet, dass** die Substratlage (2) eine Vlieslage ist, welche zumindest zu 90 Gew.% Cellulose- und/oder Kunststofffasern umfasst, wobei die Vlieslage als Krempelvlies und/oder Spinnvlies, bevorzugt als Spunbond, und/oder Meltblown ausgebildet ist.

6. Filtermedium nach Anspruch 5, **dadurch gekennzeichnet, dass** die Substratlage (2) Bikomponentenfasern aufweist, insbesondere mit einem PP-Basiswerkstoff, und/oder ein Flächengewicht zwischen 25 und 125 g/m², bevorzugt zwischen 30 und 90 g/m², aufweist.

7. Filtermedium (1) nach einem der vorhergehenden Ansprüche, **dadurch gekennzeichnet, dass** das Haftvermittlungsmittel der Haftvermittlerschicht (6) zwischen benachbarten Fasern in der Substratlage (2) eine Segelbildung (61) verursacht.

8. Filtermedium (1) nach einem der vorhergehenden Ansprüche, **dadurch gekennzeichnet, dass** die Klebe- und/oder Schmelzklebefasern (4) mit einem Masseauftrag zwischen 1 bis 10 g/m², vorzugsweise 4 bis 6 g/m², aufgebracht sind.

9. Filtermedium (1) nach einem der vorhergehenden Ansprüche, **dadurch gekennzeichnet, dass** die Nanofasern der Nanofaserlage (3) aus einem Polyamid-Werkstoff bestehen oder diesen aufweisen, insbesondere PA6, und/oder einen mittleren Faserdurchmesser zwischen 50 bis 500 nm, vorzugsweise zwischen 70 bis 150 nm, aufweisen.

10. Filtermedium (1) nach einem der vorhergehenden Ansprüche, **dadurch gekennzeichnet, dass** auf der Nanofaserlage (3) eine Schutzlage (5) angeordnet ist, die vermittels der Klebe- und/oder Schmelzklebefasern (4) mit der Nanofaserlage (3) und der Substratlage (2) verbunden ist.

11. Filtermedium (1) nach Anspruch 10, **dadurch gekennzeichnet, dass** die Schutzlage (5) eine Vlieslage ist, welche zumindest zu 90 Gew.% Cellulose- und/oder Kunststofffasern umfasst, wobei insbesondere die Schutzlage (5) als Krempelvlies und/oder Spinnvlies, bevorzugt als Spunbond oder Meltblown, ausgebildet ist.

12. Filtermedium (1) nach Anspruch 11, **dadurch gekennzeichnet, dass** die Schutzlage (5) Bikomponentenfasern aufweist, insbesondere mit einem PET- oder PP-Basiswerkstoff, und/oder ein Flächengewicht zwischen 15 g/m² und 40 g/m², bevorzugt 25 g/m² bis 30 g/m².

13. Filtermedium (1) nach einem der vorhergehenden Ansprüche, **dadurch gekennzeichnet, dass** das Filtermedium (1) ausschließlich aus der Substratlage (2), der Nanofaserlage (3), den Klebe- und/oder Schmelzklebefasern (4) und der Haftvermittlerschicht (6) besteht.

14. Filtermedium (1) nach einem der vorhergehenden Ansprüche, **dadurch gekennzeichnet, dass** die Klebe- und/oder Schmelzklebefasern (4) einen thermoplastischen Kunststoff aufweisen oder daraus bestehen, wobei bevorzugt der thermoplastische Kunststoff ausgesucht ist aus einer oder mehrerer Verbindungen der folgenden Gruppen: Polyolefin, Polyester, Polyurethan und/oder Polyamid.

15. Verfahren zur Herstellung eines Filtermediums (1) nach einem der vorhergehenden Ansprüche, **gekennzeichnet durch** die folgenden Schritte:
A Bereitstellen einer Substratlage (2);
B Flächig Auftragen eines Haftvermittlungsmittels auf die Substratlage (2) um eine Haftvermittlungsschicht (6) zu bilden,
C Anordnen einer Nanofaserlage (3) auf der Haftvermittlungsschicht (6), dadurch Fixieren der Nanofaserlage (3) bezüglich der Substratlage (2);
D Anordnen von Klebe- und/oder Schmelzklebefasern auf der Nanofaserlage (3), die die Nanofaserlage (3) durchdringen, dadurch zumindest Ausbilden einer Verbindung zwischen der Substratlage (2) und der Nanofaserlage (3).

16. Verfahren nach Anspruch 15, wobei das Verfahren ein diskontinuierliches Verfahren ist und insbesondere der Schritt D zeitlich und/oder räumlich getrennt von dem Schritt C durchgeführt wird, wobei bevorzugt nach dem Schritt C der Schritt C1 Aufwickeln eines aus Schritt C erhaltenen Produktes; und vor dem Schritt D der
Schritt D1 Zuführen des in Schritt C1 aufgewickelten Produktes;
durchgeführt wird.

17. Verfahren nach Anspruch 15 oder 16, wobei das Verfahren zusätzlich umfasst Schritt F Anordnen einer Schutzlage (5) auf der Nanofaserlage (6), dabei Ausbilden einer Verbindung zwischen der Schutzlage (5), der Nanofaserlage (6) und der Substratlage (2) durch die Klebe- und/oder Schmelzklebefasern (4).

18. Verfahren nach Anspruch 17, wobei die Klebe- und/oder Schmelzklebefasern (4) vor dem Anordnen der Schutzlage (5) auf der Nanofaserlage (6) entweder (a) auf der Nanofaserlage (6) abgelegt werden oder (b) auf der Schutzlage (5) abgelegt werden, wobei die Schutzlage (5) beim Anordnen auf der Nanofaserlage (6) mit den Klebe- und/oder Schmelzklebefasern (4) voran auf der Nanofaserlage (6) angeordnet wird.

19. Verfahren nach einem der Ansprüche 15 bis 18, wobei das Auftragen des Haftvermittlungsmittels auf die Substratlage (2) in dem Schritt B vermittels einer vom Haftvermittlungsmittel benetzten Walze erfolgt.

20. Verwendung des Filtermediums (1), gemäß einem der Ansprüche 1 bis 14, in einem Filterelement, insbesondere in gefalteter, geprägter und/oder gewickelter Form, insbesondere in Verbindung mit einer Wärmekraftmaschine, einer elektrochemischen Vorrichtung und/oder einer Belüftungsvorrichtung, insbesondere eines Kraftfahrzeugs.
